# EUROPÄISCHE PATENTANMELDUNG

(11) **EP 4 711 553 A1**
(43) Veröffentlichungstag der Anmeldung: **18.03.2026**
(21) Anmeldenummer: 25201561.5
(22) Anmeldetag: 11.09.2025
(51) Int. Cl.: E04F 15/02, E04F 15/024, G01N 35/00

(54) **BODENPODEST UND LABORINSTALLATION FÜR AUTOMATISIERTE LABORS**

(30) Priorität: 13.09.2024 DE 202024105274 U; 29.04.2025 DE 102025116507
(71) Anmelder: LabMatic Automation GmbH, 31515 Wunstorf (DE)
(72) Erfinder: Lange, Mario, 31515 Wunstorf (DE)
(74) Vertreter: Werner, André

(57) **Zusammenfassung**

Die Erfindung betrifft ein modular aufgebautes Bodenpodest und eine darauf basierende Laborinstallation für den Einsatz in automatisierten Labors. Das Bodenpodest besitzt mehrere Profilgestellmodule (1) sowie mehrere darauf montierte Bodenplatten (3), die einen Podestboden zum Begehen und zum Aufstellen von Laborgeräten bilden. Die Laborinstallation umfasst neben dem Bodenpodest einen Industrieroboter (6) sowie eine Verfahreinheit (7) zum Verfahren des Industrieroboters (6). Ein Führungsschlitz (4) im Podestboden ermöglicht die getrennte Installation der Verfahreinheit (7) und des Industrieroboters (6) beidseitig des Podestbodens, indem die Verfahreinheit (7) und der Industrieroboter (6) mittels eines durch den Führungsschlitz (4) durchtretenden und hierin geführten Verbindungselements (8) miteinander verbunden sind. Das Bodenpodest und die darauf basierende Laborinstallation zeichnen sich durch ihre modulare und platzsparende Konstruktion, die Nivellierbarkeit und Stabilität, den Schutz vor Verunreinigungen, die einfache Montage sowie die Anpassbarkeit an unterschiedliche Laborräume aus.

## Beschreibung

Die Erfindung betrifft ein innovatives Bodenpodest und eine darauf basierende Laborinstallation, die sich speziell für den Einsatz in automatisierten Laboren eignen.

Im Rahmen der labormedizinischen Untersuchungen kommen zunehmend Analyse-Vollautomaten zum Einsatz, mittels derer bestimmte labormedizinische Tests vollständig automatisiert durchgeführt werden. Das zu untersuchende Probenmaterial wird in geeigneten Laborprobenbehältnissen, zumeist Probenröhrchen, in die Analyse-Vollautomaten eingebracht, in denen Tests ohne physischen menschlichen Eingriff erfolgen. Die Analyse-Vollautomaten sind üblicherweise für spezielle Laboruntersuchungen konzipiert, zum Beispiel für Blutbildanalysen oder für die Analyse der Immunchemie und der klinischen Chemie. Insofern sind in den Laboren für labormedizinische Untersuchungen üblicherweise diverse, auf einen spezifischen Testzweck ausgerichtete Analyseautomaten im Einsatz.

Die vorbereitenden Arbeiten, wie zum Beispiel die Probenpräparation und die Bestückung der Analyse-Vollautomaten, erfolgen regelmäßig durch medizinisches Fachpersonal. Ein Teil dieser Laborarbeiten umfasst Routinetätigkeiten, die ebenfalls automatisierbar sind. Die das Probenmaterial enthaltenden Laborprobenbehältnisse können beispielsweise mittels eines gängigen Industrieroboters, d. h. eines Roboters mit einem Greifarm bzw. Manipulator, automatisiert von einer Übergabestation an die jeweiligen Analyse-Vollautomaten übergeben oder - falls erforderlich - zum Zentrifugieren vorbereitet werden. Ein derart eingerichtetes, mit einem Industrieroboter arbeitendes automatisiertes Labor ist beispielsweise in DE 10 2021 114 970 A1 beschrieben.

Aus Industrieanwendungen ist die Verwendung von Schienensystemen bekannt, die speziell entwickelt wurden, um Industrieroboter zu führen. Solche Systeme sind in Fertigungs- und Lagerumgebungen verbreitet und ermöglichen die Bewegung von Robotern zwischen festen Punkten. So beschreibt DE 10 2007 005 029 A1 beispielsweise ein System, bei dem ein Roboter auf einem selbstfahrenden Werkstückträger montiert ist, der auf einem Schienensystem bewegt werden kann.

Ferner offenbart DE 36 23 506 A1 eine schienengebundene Führungsvorrichtung für einen Industrieroboter, die darauf abzielt, die Beweglichkeit und Positioniergenauigkeit des Roboters zu verbessern.

Ein Problem besteht darin, dass viele der bestehenden Schienensysteme zur Führung von Industrierobotern fest in den Boden integriert sind. Dies macht ihre Installation aufwendig und kostspielig, da bauliche Änderungen am Untergrund erforderlich sind. Zudem fehlt es diesen Systemen an Modularität, wodurch Anpassungen an veränderte räumliche oder betriebliche Anforderungen schwierig und teuer sind.

Darüber hinaus sind viele der aktuellen Lösungen nicht speziell für die besonderen Anforderungen automatisierter Labors konzipiert. Dies betrifft insbesondere Aspekte wie Hygiene, Platzbedarf und die Möglichkeit, unterschiedliche Laborgeräte effizient zu integrieren. Die Integration von Führungssystemen in bestehenden Laborböden kann kompliziert und zeitaufwendig sein, was die Implementierung solcher Technologien in dynamischen Umgebungen erschwert.

Ein weiterer Nachteil ist die eingeschränkte Möglichkeit, unebene Böden auszugleichen. Viele Systeme bieten keine ausreichenden Nivellierungsmöglichkeiten, was zu Problemen bei der Ausrichtung und Stabilität von Geräten und Robotern führen kann. Dies kann die Präzision und Zuverlässigkeit der Automatisierung beeinträchtigen.

Zudem fehlt es den vorhandenen Systemen oft an einer durchdachten Konstruktion für die Integration von Infrastrukturkomponenten wie Kabel- oder Medienführungen. Diese Elemente müssen häufig extern verlegt werden, was zusätzliche Kosten und Komplexität verursacht.

Die Aufgabe der vorliegenden Erfindung besteht darin, ein Bodenpodest und eine dazugehörige Laborinstallation bereitzustellen, die speziell für den Einsatz in automatisierten Labors optimiert sind. Ziel ist es dabei, eine zuverlässige, wartungsfreundliche und anpassbare Lösung zu schaffen, die die Automatisierung von Laborprozessen erleichtert und den Arbeitsaufwand durch die Integration moderner Robotertechnologie reduziert. Damit soll ein Beitrag zur Effizienzsteigerung und Optimierung von Arbeitsabläufen in modernen Labors geleistet werden.

Diese Aufgabe wird durch ein Bodenpodest mit den Merkmalen nach Anspruch 1 sowie eine Laborinstallation nach Anspruch 6 gelöst. Zweckmäßige Weiterbildungen der Erfindung sind in den Ansprüchen 2 bis 5 sowie 7 bis 9 aufgeführt.

Das erfindungsgemäße Bodenpodest, das vorzugsweise Bestandteil einer Laborinstallation ist, ist zum Aufbau auf einem Bestandsfußboden eines Laborraumes eines automatisierten Labors vorgesehen.

Das Bodenpodest umfasst eine modulare Struktur aus mehreren Profilgestellmodulen, wobei die Profilgestellmodule jeweils aus miteinander verbundenen Konstruktionsprofilelementen aufgebaut sind. Die einzelnen Profilgestellmodule sind zur Ausbildung des Bodenpodests vorzugsweise untereinander verbunden, zum Beispiel miteinander verschraubt. Auf den Profilgestellmodulen sind mehrere Bodenplatten befestigt, die gemeinsam einen Podestboden ausbilden. Die Bodenplatten bzw. der Podestboden können dabei beispielsweise durch Verstiften mit den Profilgestellmodulen verbunden sein.

Der Podestboden weist eine Nutzseite auf, die sowohl zum Begehen als auch zum Aufstellen von Laborgeräten dient, sowie eine der Nutzseite gegenüberliegende Zwischenbodenseite. Die Nutzseite ist bei bestimmungsgemäßer Nutzung die obere Seite des Podestbodens und die Zwischenbodenseite die untere Seite des Podestbodens. Bei dem auf einem Bestandsfußboden aufgebauten Bodenpodest wird der zwischenbodenseitige Raum zwischen dem Podestboden und dem Bestandsfußboden entsprechend als Zwischenbodenraum bezeichnet.

Weiterhin umfasst das Bodenpodest mehrere Stellfüße, die an den Profilgestellmodulen angebracht sind, um die Profilgestellmodule am Bestandsfußboden des Laborraums (beabstandet zum Bestandsfußboden) abzustützen. Diese Stellfüße dienen dazu, die Profilgestellmodule zu tragen und den Podestboden zu nivellieren.

Bei bestimmungsgemäßem Aufbau sind bzw. werden die Profilgestellmodule so mittels der Stellfüße nivelliert, dass die Bodenplatten einen in einer einheitlichen Ebene horizontal ausgerichteten Podestboden ausbilden.

Die Profilgestellmodule und die Bodenplatten sind so angeordnet, dass ein Führungsschlitz im Podestboden ausgebildet ist. Außerdem bildet das Bodenpodest auf der Zwischenbodenseite des Podestbodens einen Installationsraum zur Installation weiterer Bauteile aus. Der Installationsraum befindet sich mithin im Zwischenbodenraum zwischen den die Bodenplatten tragenden Profilgestellmodulen.

Die modulare Struktur des Bodenpodests ermöglicht eine hohe Flexibilität bei der Installation und Anpassung an unterschiedliche räumliche Gegebenheiten. Dies erleichtert nicht nur den Aufbau, sondern auch die Demontage und Wiederverwendung in anderen Laborumgebungen, was Zeit und Kosten spart.

Ein weiterer Vorteil ist die Integration von Stellfüßen an den Profilgestellmodulen, die eine präzise Nivellierung des Podestbodens ermöglichen. Dies gewährleistet eine horizontale Ausrichtung, auch auf unebenen Bestandsfußböden, wodurch die Stabilität und Funktionssicherheit von darauf installierten Laborgeräten verbessert wird. Der Podestboden dient als stabile Nutzfläche, die sowohl als Aufstellfläche für Laborgeräte als auch als begehbare Fläche genutzt werden kann.

Der im Bodenpodest befindliche Installationsraum bietet zusätzlichen Platz für die Installation weiterer Komponenten, was eine kompakte und platzsparende Bauweise unterstützt.

Die erfindungsgemäße Laborinstallation für einen Laborraum eines automatisierten Labors integriert das beschriebene Bodenpodest. Die Laborinstallation umfasst zudem einen Industrieroboter zur Handhabung bzw. Manipulation von Laborproben (zum Beispiel Probenmaterial enthaltende Laborprobenbehältnisse oder Einheiten aus mehreren derselben) sowie eine Verfahreinheit zum - vorzugsweise lateralen - Verfahren des Industrieroboters im Laborraum. Die Verfahreinheit weist einen mit dem Industrieroboter verbundenen Schlitten und ein Schienensystem auf, wobei der Schlitten auf dem Schienensystem zur Positionierung des Industrieroboters im Laborraum verfahrbar ist. Üblicherweise ist das Schienensystem so ausgebildet, dass der Industrieroboter zwischen zwei definierten Endpunkten verfahren werden kann.

Die Verfahreinheit ist im zwischenbodenseitigen Installationsraum des Bodenpodests installiert, wobei das Schienensystem der Verfahreinheit entlang des im Podestboden ausgebildeten Führungsschlitzes ausgerichtet ist. Der Industrieroboter ist auf der Nutzseite des Podestbodens angeordnet und mit dem Schlitten der Verfahreinheit durch ein im Führungsschlitz geführtes Verbindungselement verbunden. Das heißt, die Verfahreinheit und der Industrieroboter sind räumlich getrennt durch den Podestboden und nur durch das im Führungsschlitz geführte Verbindungselement miteinander gekoppelt, sodass der Industrieroboter infolge der an den Führungsschlitz angepassten Installation des Schienensystems entlang des Führungsschlitzes verfahrbar ist. Das Schienensystem ist mithin passend zum Führungsschlitz ausgerichtet, vorzugsweise linear bzw. geradlinig. Das Schienensystem kann mit dem Bodenpodest, d. h. mit dem Podestboden und/oder den Profilgestellmodulen, mechanisch verbunden sein.

Einer der Vorteile der vorgeschlagenen Laborinstallation liegt in der Integration der Verfahreinheit in den zwischenbodenseitigen Installationsraum des Bodenpodests. Durch diese Anordnung wird der verfügbare Raum im Labor optimal genutzt, da die Bewegungsmechanik des Industrieroboters unterhalb des Podestbodens verborgen und abgedeckt ist. Dies schafft eine aufgeräumte und sichere Arbeitsumgebung, in der Platz für weitere Laborgeräte auf der Nutzseite des Podestbodens verfügbar bleibt. Der Führungsschlitz im Podestboden ermöglicht eine präzise Führung des Verbindungselements zwischen dem Schlitten der Verfahreinheit und dem Industrieroboter, was die Beweglichkeit und Positioniergenauigkeit des Industrieroboters innerhalb des Laborraumes erheblich verbessert.

Der Industrieroboter, der auf der Nutzseite des Podestbodens positioniert ist, kann flexibel eingesetzt werden, um Laborproben (zum Beispiel Probenmaterial enthaltende Laborprobenbehältnisse oder Einheiten aus mehreren derselben) zu manipulieren. Dies ermöglicht eine automatisierte Durchführung von Routinearbeiten, die ansonsten zeitaufwendig und fehleranfällig sein könnten. Die Verfahreinheit mit ihrem Schienensystem erlaubt es dem Industrieroboter, sich präzise und effizient zwischen verschiedenen Arbeitsstationen zu bewegen, was die Produktivität im Labor steigert und manuelle Eingriffe minimiert.

Zusätzlich ermöglicht das modulare Design des Bodenpodests ebenso wie der Laborinstallation eine einfache Anpassung an veränderte betriebliche Anforderungen. Durch die Verwendung von standardisierten Konstruktionsprofilelementen und Bodenplatten wird die Herstellung kosteneffizient gestaltet, während die Konstruktion gleichzeitig robust und langlebig bleibt. Auch die Kombination von Bodenpodest, Verfahreinheit und Industrieroboter ist robust und wartungsfreundlich, wodurch eine langfristige Nutzung und Kosteneffizienz sichergestellt sind. Gleichzeitig sorgt das Design für eine optimale Hygiene und Sicherheit, da der Führungsschlitz und der Installationsraum so gestaltet sind, dass sie leicht gereinigt und gewartet werden können.

Insgesamt steigern das beschriebene Bodenpodest und die Laborinstallation die Effizienz, Flexibilität und Zuverlässigkeit automatisierter Labors und tragen wesentlich zur Optimierung von Arbeitsabläufen bei.

Der Industrieroboter umfasst üblicherweise einen Roboterarm (auch Greifarm oder Manipulator genannt), der aus mehreren miteinander verbundenen Gelenken und Segmenten aufgebaut ist. Die Anzahl der Gelenke kann variieren, wobei häufig 6- oder 7-Achs-Roboter eingesetzt werden, da sie eine große Beweglichkeit und Reichweite bieten. Die Gelenke können rotatorische oder lineare Bewegungen ausführen, wodurch der Arm in mehrere Richtungen gelenkt werden kann. Vorzugsweise ist der Industrieroboter ein 7-Achs-Roboter.

Die Verfahreinheit umfasst, wie beschrieben, den Schlitten und das Schienensystem. Das Schienensystem dient als feste Führungseinheit und ermöglicht eine kontrollierte Bewegung des Schlittens entlang einer oder mehrerer definierter Achsen. Es besteht typischerweise aus robusten Materialien, um eine hohe Stabilität und Langlebigkeit zu gewährleisten. Die Schienen sind - passend zum Führungsschlitz im Podestboden - üblicherweise linear angeordnet und können, je nach Anwendung, gerade oder kurvenförmig sein. Die Schienensysteme können zusätzlich mit Schutzvorrichtungen wie Abdeckungen oder Dichtungen ausgestattet sein, um die Führungen vor Schmutz, Staub oder Flüssigkeiten zu schützen. Der Schlitten, der auf dem Schienensystem läuft, ist das bewegliche Element der Verfahreinheit. Er ist in der Regel mit Laufrollen, Gleitlagern oder Kugellagern ausgestattet, die für eine gleichmäßige und vibrationsarme Bewegung sorgen. Der Schlitten trägt den Industrieroboter oder andere Lasten und ist so ausgelegt, dass er hohe Gewichte mit hoher Präzision bewegen kann. Der Antrieb erfolgt meist durch einen Linearmotor, einen Zahnstangenantrieb, einen Riemen- bzw. Kettenantrieb oder eine Kugelumlaufspindel, je nach Anforderungen an Geschwindigkeit, Tragkraft und Präzision. Für die Steuerung der Bewegungen kann die Verfahreinheit über Sensoren wie Drehgeber oder Linearmaßstäbe verfügen, die die Position des Schlittens kontinuierlich überwachen. Diese Sensoren liefern Rückmeldungen an das Steuerungssystem, das die Bewegung exakt regelt und dynamische Anpassungen ermöglicht. Dies ist vorteilhaft für Anwendungen, bei denen der Industrieroboter im Laborraum präzise Positionen anfahren muss.

Als Bodenplatten kommen vorzugsweise Multiplexplatten zum Einsatz. Multiplexplatten haben eine hohe Stabilität und Tragfähigkeit, die durch die mehrschichtige Verleimung dünner Holzfurniere erreicht wird. Diese Struktur macht die Platten äußerst belastbar und sorgt dafür, dass sie das Gewicht von Laborgeräten und die dynamischen Kräfte, die durch den Betrieb von Industrierobotern entstehen können, problemlos tragen. Dadurch wird eine sichere und zuverlässige Nutzung des Bodenpodests gewährleistet.

Ein weiterer Vorteil ist die Widerstandsfähigkeit von Multiplexplatten gegenüber Verformungen. Selbst bei langfristiger Belastung oder wechselnden Umgebungsbedingungen, wie sie in Labors auftreten können, behalten die Platten ihre Form und bieten eine dauerhaft stabile Arbeitsfläche. Dies trägt zur Langlebigkeit und Zuverlässigkeit des Bodenpodests bei.

Multiplexplatten bieten zudem eine glatte und gleichmäßige Oberfläche, die sich ideal als Nutzseite des Podestbodens eignet. Diese Oberfläche ist leicht zu reinigen und erfüllt die hohen hygienischen Anforderungen, die in Laborumgebungen von zentraler Bedeutung sind. Die einfache Pflege der Platten reduziert den Wartungsaufwand und unterstützt eine sichere und saubere Arbeitsumgebung.

Darüber hinaus sind Multiplexplatten relativ leicht, wodurch die Handhabung und Installation des Bodenpodests erleichtert werden. Diese Eigenschaft ist insbesondere in modularen Systemen von Vorteil, da sie eine schnelle und unkomplizierte Montage und Demontage ermöglicht.

Ein weiterer Vorteil ist die Nachhaltigkeit von Multiplexplatten, da sie aus einem erneuerbaren Rohstoff (Holz) hergestellt werden, wodurch sie eine umweltfreundliche Lösung darstellen, die den steigenden Anforderungen an nachhaltige und ressourcenschonende Lösungen in Labors gerecht wird.

Gemäß einer Ausgestaltung des Bodenpodests überdeckt eine Bürstendichtung den Führungsschlitz im Podestboden dichtend. Die Bürstendichtung umfasst hierzu mindestens eine Streifenbürste. Die Streifenbürste ist hierbei üblicherweise so angeordnet, dass sie bürstenhalterseitig am Rand des Führungsschlitzes anliegt, sodass die Borsten den Führungsschlitz überdecken bzw. verschließen. Da die Borsten flexibel nachgeben, können dennoch durch den Führungsschlitz reichende Bauteile entlang des Führungsschlitzes bewegt werden, wobei die Borsten vor und nach dem durchtretenden Bauteil den Führungsschlitz verschließen. Ein Vorteil der Bürstendichtung liegt in ihrer Fähigkeit, den Führungsschlitz effektiv abzudichten. Dies verhindert, dass Schmutz, Staub oder andere Verunreinigungen durch den Führungsschlitz in den darunterliegenden Zwischenbodenraum, insbesondere den Installationsraum, gelangen. Diese Abdichtung ist besonders wichtig in Laborumgebungen, die strengen hygienischen Standards unterliegen. Durch die Bürstendichtung wird sichergestellt, dass die Reinigung des Podestbodens leicht durchgeführt werden kann, ohne dass Schmutz in schwer zugängliche Bereiche eindringt. Darüber hinaus schützt die Bürstendichtung die im Installationsraum integrierten Bauteile, wie die Verfahreinheit, vor potenziellen Beschädigungen durch Verunreinigungen. Dies trägt zur Langlebigkeit und Zuverlässigkeit der gesamten Laborinstallation bei, da die mechanischen und elektronischen Komponenten im Installationsraum geschützt bleiben und ihre Funktion über einen längeren Zeitraum hinweg störungsfrei erfüllen können. Die Verwendung der Bürstendichtung ermöglicht eine flexible Anpassung der Dichtung an die Dimensionen und die Form des Führungsschlitzes. Dies gewährleistet eine passgenaue und zuverlässige Abdichtung, ohne die Bewegungsfähigkeit des Verbindungselements, das im Führungsschlitz geführt wird, einzuschränken. Zusätzlich bietet die Bürstendichtung eine geräuschdämmende Funktion. Beim Betrieb der Verfahreinheit und der Bewegung des Verbindungselements können Geräusche entstehen, die durch die weichen Borsten der Bürstendichtung effektiv reduziert werden.

Gemäß einer besonderen Ausführung der Bürstendichtung umfasst diese mindestens zwei gegenüberliegend an den Rändern des Führungsschlitzes angebrachte Streifenbürsten, wobei die Borsten jeweils in entgegengesetzte Richtungen weisen und sich entlang einer zwischen den Rändern des Führungsschlitzes verlaufenden Linie, vorzugsweise der Mittellinie, in einem definierten Bereich überlappen oder eng aneinanderliegen. Diese beidseitige Anordnung zweier Streifenbürsten im Führungsschlitz bietet eine noch höhere Flexibilität bei der Bewegung des Verbindungselements im Führungsschlitz. Trotz der engen Abdichtung bleibt die Beweglichkeit des Verbindungselements nahezu ungehindert, da die Borsten durch ihre entgegengesetzten Richtungen nachgeben können, ohne den Bewegungsfluss zu beeinträchtigen.

Das Verbindungselement zwischen dem Industrieroboter und dem Schlitten der Verfahreinheit ist vorzugsweise in Form eines Stabes, einer Platte oder eines Schwerts ausgebildet. Die jeweilige Form und Dimensionierung ist üblicherweise der Form und dem Verlauf des Führungsschlitzes angepasst. Besonders bevorzugt ist die Ausbildung in Form eines Schwerts mit keilförmig zulaufender Vorder- und Hinterkante. Der langgestreckte, in den Führungsschlitz passende Querschnitt des schwertförmig bzw. schwertartig ausgebildeten Verbindungselements gewährleistet die mechanische Stabilität der Verbindung. Die keilförmigen Kanten tragen während des Verfahrens des Industrieroboters zur hemmungsfreien Bewegung des Verbindungselements im Führungsschlitz bei - insbesondere bei im Führungsschlitz eingebrachter Bürstendichtung.

Die Konstruktionsprofilelemente der Profilgestellmodule sind aufgrund des geringen Gewichts und der hohen Korrosionsbeständigkeit vorzugsweise aus einem Aluminiumwerkstoff hergestellt, d. h. Aluminiumprofilen. Als gängige Größen eignen sich 80x80L-Profile bzw. 40x80L-Profile, d. h. Leichtbau-Profile mit Querschnittsabmessungen von 80 mm x 80 mm bzw. 40 mm x 80 mm.

Es kann ferner vorgesehen sein, den Podestboden bzw. die Bodenplatten mit einer Kunststoffoberfläche, vorzugsweise aus Polyvinylchlorid (PVC), zu versehen. Dies kann sowohl durch eine vollflächige Beschichtung als auch durch das Verkleben von PVC-Belägen erfolgen. Auf diese Weise entsteht eine strapazierfähige, pflegeleichte und hygienische Nutzschicht, die den Untergrund zuverlässig schützt. Darüber hinaus bietet die Ausgestaltung Vorteile wie hohe Abriebfestigkeit, Rutschhemmung, leichte Reinigung sowie eine lange Lebensdauer und trägt damit wesentlich zur Funktionssicherheit und Wirtschaftlichkeit der Konstruktion bei.

Die Kanten des Podestbodens bzw. der Bodenplatten sind zur Erhöhung der Stabilität und zur Vermeidung von Beschädigungen oder Abplatzungen vorzugsweise mit Winkeln verkleidet. Die Winkel schützen die Kanten zuverlässig vor mechanischer Beanspruchung, gewährleisten eine saubere und dauerhafte Ausführung und tragen zudem zu einer ansprechenden optischen Gestaltung bei.

In bzw. an den Profilgestellmodulen können Komponenten der Elektroinstallation integriert sein, beispielsweise Steckdosen, Schalter oder Netzwerkanschlüsse. Durch die direkte Unterbringung solcher Installationen innerhalb des Bodenpodests entsteht eine platzsparende, geschützte und zugleich benutzerfreundliche Anordnung. Dadurch werden zusätzliche Installationskanäle vermieden und es ergibt sich eine aufgeräumte sowie funktionale Gesamtkonstruktion.

Auf den Profilgestellmodulen und/oder auf dem Podestboden können definierte Ablagepositionen vorgesehen sein. Diese ermöglichen es, Geräte stets an einer festen, vorgegebenen Position abzustellen. Dadurch wird eine geordnete Nutzung unterstützt, die Handhabung erleichtert und zugleich eine höhere Betriebssicherheit gewährleistet.

Die Erfindung ist nachfolgend anhand eines Ausführungsbeispiels und mit Bezug auf die schematischen Zeichnungen näher erläutert, wobei gleiche oder ähnliche Merkmale mit gleichen Bezugszeichen versehen sind; dazu zeigen:
- Fig. 1:: die Laborinstallation mit dem Bodenpodest in perspektivischer Ansicht und
- Fig. 2:: die Laborinstallation mit dem Bodenpodest in Explosionsdarstellung.

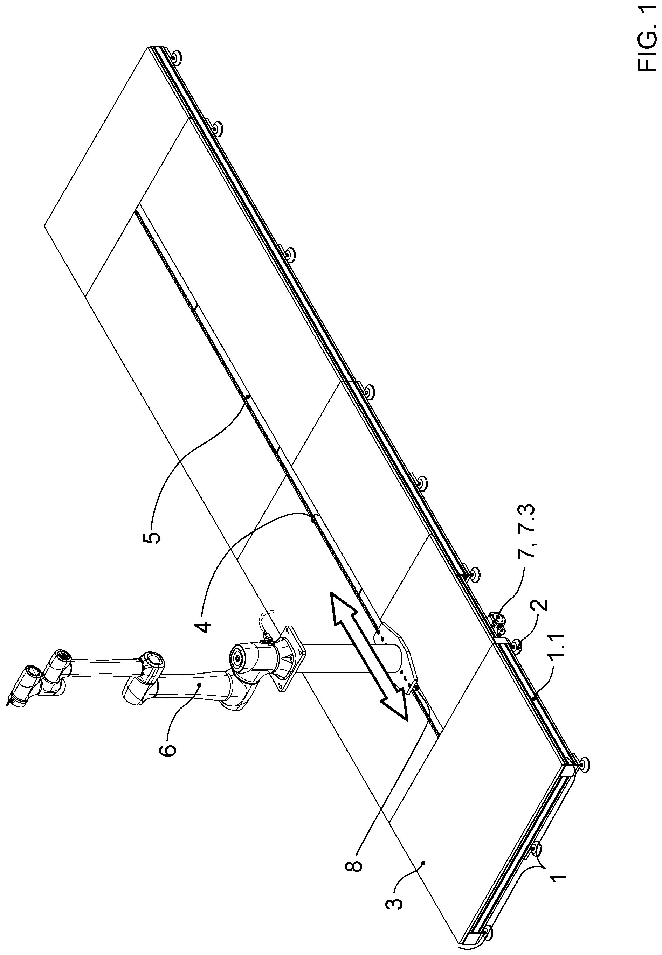

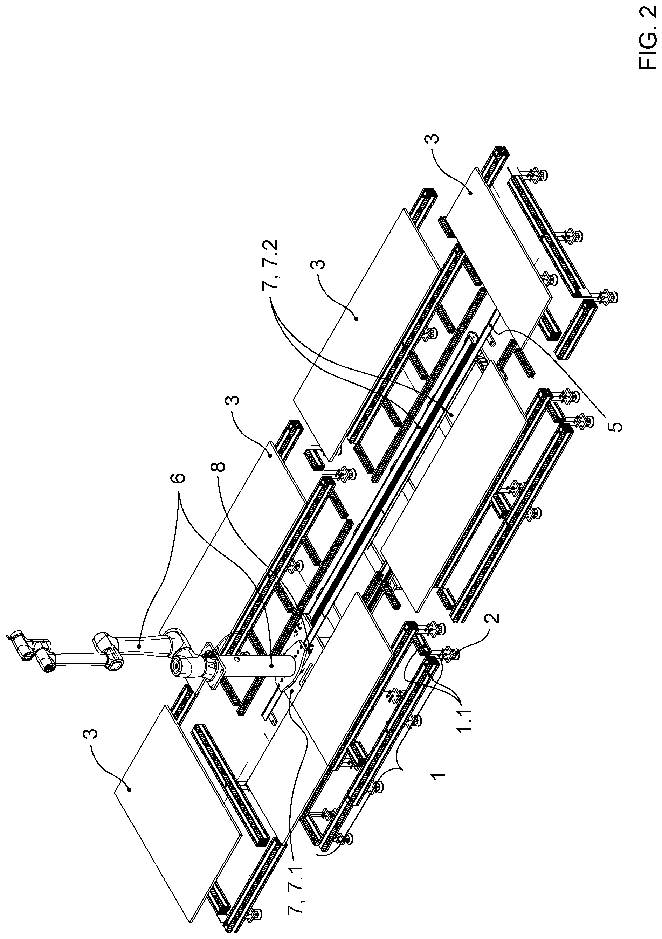

In Fig. 1 und Fig. 2, die die gleiche Ausführung der Laborinstallation zeigen, sind die Komponenten des Bodenpodests bzw. der Laborinstallation partiell nur beispielhaft mit Bezugszeichen versehen, um die Übersichtlichkeit der Darstellungen zu wahren.

Das Bodenpodest gemäß Fig. 1 und Fig. 2 umfasst mehrere Profilgestellmodule 1, die aus unterschiedlichen Konstruktionsprofilelementen 1.1 aufgebaut sind. Die Profilgestellmodule 1 sind über die Stellfüße 2 am Bestandsfußboden des Laborraums abgestützt und bilden die tragende Struktur des Bodenpodests. Zur Erhöhung der Gesamtstabilität sind die Profilgestellmodule 1 untereinander verschraubt.

Auf den Profilgestellmodulen 1 sind Bodenplatten 3 befestigt, die den Podestboden ausbilden. Dieser dient sowohl als Aufstellfläche für Laborgeräte als auch als begehbare Freifläche. Im Podestboden ist der nur in Fig. 1 bezeichnete Führungsschlitz 4 ausgebildet, der mittels der Bürstendichtung 5 verschlossen wird.

Die dargestellte Laborinstallation umfasst einen Industrieroboter 6, der auf der Nutzseite des Podestbodens angeordnet ist. Der Industrieroboter 6 ist mit einer Verfahreinheit 7 verbunden, die unterhalb des Podestbodens im zwischenbodenseitigen Installationsraum installiert ist. Die Verfahreinheit 7 umfasst den Schlitten 7.1, das Schienensystem 7.2 und den Antrieb 7.3, wobei in Fig. 1 lediglich der Antrieb 7.3 (hier der Motor) sichtbar ist. Das Schienensystem 7.2 der Verfahreinheit 7 ist entlang des Führungsschlitzes 4 ausgerichtet. Das Verbindungselement 8 verbindet den Industrieroboter 6 mit dem Schlitten 7.1.

Die Bürstendichtung 5 umfasst mehrere in Reihe hintereinander angeordnete Streifenbürsten, die den Führungsschlitz 4 dichtend überdecken und gleichzeitig das Durchführen des Verbindungselements 8 zwischen dem Industrieroboter 6 und der Verfahreinheit 7 ermöglichen.

Die Explosionsdarstellung gemäß Fig. 2 verdeutlicht den modularen Aufbau des Bodenpodests und der Laborinstallation aus Fig. 1. Fig. 2 zeigt insbesondere den Aufbau der Verfahreinheit 7 mit dem Schlitten 7.1 und dem Schienensystem 7.2. Zudem ist das als Schwert mit keilförmiger Vorder- und Hinterkante ausgebildete Verbindungselement 8 zwischen dem Schlitten 7.1 der Verfahreinheit 7 und dem Sockel des Industrieroboters 6 erkennbar.

### Bezugszeichenliste

- 1: Profilgestellmodul
- 1.1: Konstruktionsprofilelement
- 2: Stellfuß
- 3: Bodenplatte
- 4: Führungsschlitz
- 5: Bürstendichtung
- 6: Industrieroboter
- 7: Verfahreinheit
- 7.1: Schlitten
- 7.2: Schienensystem
- 7.3: Antrieb
- 8: Verbindungselement

## Patentansprüche

1. Bodenpodest für eine Laborinstallation zum Aufbau auf einem Bestandsfußboden eines Laborraumes, wobei das Bodenpodest umfasst:
- eine modulare Struktur aus mehreren Profilgestellmodulen (1), wobei die Profilgestellmodule (1) jeweils aus miteinander verbundenen Konstruktionsprofilelementen (1.1) aufgebaut sind,
- mehrere Bodenplatten (3), die auf den Profilgestellmodulen (1) befestigt sind, wobei die Bodenplatten (3) gemeinsam einen Podestboden ausbilden, und wobei der Podestboden eine Nutzseite zum Begehen und zum Aufstellen von Laborgeräten und eine der Nutzseite gegenüberliegende Zwischenbodenseite aufweist,
- mehrere Stellfüße (2), die an den Profilgestellmodulen (1) zum Tragen der Profilgestellmodule (1) und zur Nivellierung des Podestbodens angebracht sind, wobei die Profilgestellmodule (1) und die Bodenplatten (3) so angeordnet sind, dass ein Führungsschlitz (4) im Podestboden ausgebildet ist, und wobei das Bodenpodest auf der Zwischenbodenseite des Podestbodens einen Installationsraum zur Installation weiterer Bauteile ausbildet.

2. Bodenpodest nach Anspruch 1, **dadurch gekennzeichnet, dass** die Konstruktionsprofilelemente (1.1) aus einem Aluminiumwerkstoff hergestellt sind.

3. Bodenpodest nach Anspruch 1 oder 2, **dadurch gekennzeichnet, dass** die Bodenplatten (3) Multiplexplatten sind.

4. Bodenpodest nach einem der Ansprüche 1 bis 3, **dadurch gekennzeichnet, dass** eine Bürstendichtung (5) den Führungsschlitz (4) im Podestboden dichtend überdeckt, wobei die Bürstendichtung (5) mindestens eine Streifenbürste umfasst.

5. Bodenpodest nach Anspruch 4, **dadurch gekennzeichnet, dass** die Bürstendichtung (5) mindestens zwei, gegenüberliegend an den Rändern des Führungsschlitzes (4) angebrachte Streifenbürsten aufweist, deren Borsten in entgegengesetzte Richtungen weisen und sich entlang einer zwischen den Rändern des Führungsschlitzes (4) verlaufenden Linie in einem definierten Bereich überlappen oder eng aneinanderliegen.

6. Laborinstallation für einen Laborraum eines automatisierten Labors, aufweisend einen Industrieroboter (6) zur Handhabung von Laborproben sowie eine Verfahreinheit (7), die einen mit dem Industrieroboter (6) verbundenen Schlitten (7.1) sowie ein Schienensystem (7.2) umfasst, auf dem der Schlitten (7.1) zur Positionierung des Industrieroboters (6) im Laborraum verfahrbar ist,
**dadurch gekennzeichnet, dass** die Laborinstallation ein Bodenpodest nach einem der Ansprüche 1 bis 5 umfasst, wobei:
- die Verfahreinheit (7) im zwischenbodenseitigen Installationsraum installiert ist, wobei das Schienensystem (7.2) der Verfahreinheit (7) entlang des im Podestboden ausgebildeten Führungsschlitzes (4) ausgerichtet ist,
- der Industrieroboter (6) auf der Nutzseite des Podestbodens angeordnet ist, und
- der Industrieroboter (6) mit dem Schlitten (7.1) der Verfahreinheit (7) mittels eines im Führungsschlitz (4) geführten Verbindungselements (8) verbunden ist.

7. Laborinstallation nach Anspruch 6, **dadurch gekennzeichnet, dass** der Industrieroboter (6) ein 7-Achs-Roboter ist.

8. Laborinstallation nach Anspruch 6 oder 7, **dadurch gekennzeichnet, dass** das Verbindungselement (8) in Form eines Stabes, einer Platte oder eines Schwerts ausgebildet ist.

9. Laborinstallation nach Anspruch 8, **dadurch gekennzeichnet, dass** das Verbindungselement (8) in Form eines Schwerts mit keilförmig zulaufender Vorder- und Hinterkante ausgebildet ist.
